# EUROPÄISCHE PATENTANMELDUNG

(11) **EP 2 082 792 A1**
(43) Veröffentlichungstag der Anmeldung: **29.07.2009**
(21) Anmeldenummer: 08021959.5
(22) Anmeldetag: 18.12.2008
(51) Int. Cl.: B01D 21/24, B01D 53/50

(54) **Siebkorb zur Sicherung von Zu- oder Abläugen in Behältern**

(30) Priorität: 26.01.2008 DE 102008006173
(71) Anmelder: AE & E Lentjes GmbH, 40880 Ratingen (DE)
(72) Erfinder: Ansperger, Rainer, 45968 Gladbeck (DE)
(74) Vertreter: Stenger, Watzke & Ring

(57) **Zusammenfassung**

Die vorliegende Erfindung betrifft einen Siebkorb zur Sicherung von Zu- oder Abläufen in Behältern, welcher sich einfach montieren lässt und insbesondere eine gegenüber korrosiven Umgebungen hohe Resistenz aufweist.

## Beschreibung

Die vorliegende Erfindung betrifft einen Siebkorb zur Sicherung von Zu- oder Abläufen in Behältern. Insbesondere betrifft die vorliegende Erfindung einen Siebkorb, welcher sich in einfacher Weise montieren lässt.

Siebkörbe zur Sicherung von Zu- oder Abläufen in Behältern dienen der Verhinderung des Eindringens von Gegenständen in die Zu- oder Abläufe von Behältern, welche in den Zu- oder Abläufen zu Verstopfungen oder Beschädigungen führen könnten. Bei industriellen Großanlagen wie beispielsweise Wäschertürmen von Rauchgasentschwefelungsanlagen in Kraftwerken sind Siebkörbe entsprechend den großen Querschnitten der Zu- oder Abläufe ebenfalls groß zu dimensionieren. Ebenso sind solche Siebkörbe in industriellen Anlagen wie den genannten Rauchgasreinigungsanlagen vielfach korrosiven Umgebungen ausgesetzt, so dass die Siebkörbe und die Befestigungen der Siebkörbe aus gegenüber den korrosiven Einflüssen beständigem Material gefertigt werden müssen. Hierzu werden in der Regel Edelstähle oder mit einer Gummierung versehene Stahlbauteile eingesetzt.

Die Verwendung von Edelstählen wie beispielsweise Hastelloy ist jedoch äußerst kostenintensiv, da Edelstähle, insbesondere in der letzten Zeit, zu sehr hohen Preisen gehandelt werden. Die Ausgestaltung entsprechender Siebkörbe und Halterungen in Gummi ummanteltem Stahl ist aufgrund der äußerst aufwendig aufzubringenden Gummierung ebenfalls kosten- und zeitintensiv, da die Gummierung vollständig geschlossen sein muss und dementsprechend erst nach der Montage der Siebkörbe in den Behältern aufgebracht werden kann.

So ist es beispielsweise bisher im Stand der Technik üblich, Siebkörbe zur Sicherung von Zu- oder Abläufen in Wäschern von Rauchgasentschwefelungsanlagen in Form von Gitterplatten auszubilden, welche auf Edelstahlhalteträger oder Halteträger aus gummiertem Stahl aufgeschraubt werden. Hierbei müssen bei der Verwendung von Halteträger aus gummiertem Stahl die Halteträger eine vollkommen geschlossene Gummierung aufweisen, so dass auch die Durchbohrungen der Träger zur Aufnahme der Befestigungsschrauben der Siebplatten gummiert sein müssen. Darüber hinaus müssen zur Verschraubung ebenfalls korrosionsfeste Materialien gewählt werden, wobei eine Korrosionsverhinderung sicherstellende Gummierung der Verschraubungen in der Regel nicht gewährleistet werden kann, so dass als Befestigungsschrauben in der Regel Edelstahlschrauben verwendet werden müssen.

Bei der Montage selbst kann es dann durch Unachtsamkeiten zu einer Beschädigung der Gummierung insbesondere im Bereich der Durchbohrungen der Halteträger kommen, wodurch das unter der Gummierung liegende Stahlmaterial nicht mehr hinreichend vor Korrosion geschützt ist und es so in diesen Bereichen im Laufe des Betriebes zu Korrosionsschäden kommen kann.

Die bisher aus dem Stand der Technik bekannten Siebkörbe bestehen im wesentlichen aus Kunststoffen wie Polypropylen oder GFK gefertigten Siebgittern, welche auf einer stabilen gummierten Stahlunterkonstruktion mit Edelstahlschrauben, Edelstahlscheiben und Edelstahlmuttern befestigt sind. Hierdurch fallen enorme Kosten für die Befestigungsmittel an, die darüber hinaus auch starken marktbedingten Schwankungen unterliegen. Ebenfalls sehr kostenintensiv sind die Unterkonstruktionen in stahlgummierter Ausführung, da die Befestigungslöcher gummierungsgerecht ausgebildet werden müssen, wodurch große Durchbohrungen entstehen, die wiederum zur Folge haben, dass sehr große Edelstahlscheiben zur Druckreduzierung auf die Gummierung notwendig sind.

Bei der Verwendung von Materialien wie GFK ist der Aufbau ähnlich. Die Montage der aus GFK gefertigten Siebkörbe erschwert sich jedoch durch die häufig am Montageort schlechte Zugänglichkeit.

Dies berücksichtigend ist es die **Aufgabe** der vorliegenden Erfindung, einen Siebkorb zur Sicherung von Zu- oder Abläufen in Behältern, insbesondere für den Einsatz in korrosiven Umgebungen, bereitzustellen, welcher sich leicht montieren lässt und darüber hinaus bei kostengünstiger Ausgestaltung eine hohe Korrosionsfestigkeit aufweist.

**Gelöst** wird diese Aufgabe durch einen Siebkorb zur Sicherung von Zu- oder Abläufen in Behältern, wobei der Siebkorb zwei an der Behälterwand montierbare Führungswinkel und ein Siebelement aufweist, an welchem in die Führungswinkel eingreifende Bereiche vorgesehen sind, wobei die Führungswinkel so zueinander angeordnet sind, dass das Siebelement in die Führungswinkel einschiebbar und über dem Zu- oder Ablauf fixierbar ist.

Hierbei kann das Siebelement in Form einer Siebplatte ausgebildet sein, welche eine im wesentlichen zur zwischen den Führungswinkeln aufgespannten Ebene parallel verlaufende Siebfläche ausbildet.

In einer Ausgestaltung des erfindungsgemäßen Siebkorbes weist das Siebelement zumindest in Teilbereichen zur zwischen den Führungswinkeln aufgespannten Ebene antiparallel verlaufende Siebflächen auf. So kann beispielsweise der Siebkorb mit einem im wesentlichen dreieckigen Querschnitt ausgebildet sein, mit zwei winkelig zueinander angeordneten Siebelementen.

Die Siebelemente können erfindungsgemäß aus Kunststoffen wie beispielsweise Polypropylen oder einem Polypropylen-Blend gefertigt sein, wobei diese wahlweise auch einen Metallkern aufweisen können.

Zur Fixierung der in die Führungswinkel eingeschobenen Siebelemente können diese mit einer Fixierungsklammer, welche ebenfalls in die Führungswinkel einschiebbar ist, fixiert werden.

In einer weiteren Ausgestaltung des erfindungsgemäßen Siebkorbes zur Sicherung von Zu- oder Abläufen in Behältern können wenigstens zwei Siebelemente übereinander in die Führungswinkel eingeschoben werden, um das einzelne Siebelement auch bei großen Zu- oder Ablaufquerschnitten leicht handhabbar zu gestalten. Die einzelnen Siebelemente können dann untereinander verbunden werden. Zur Verbindung der Siebelemente eignen sich insbesondere Sicherungsklammern, Sicherungsbolzen oder auch Schweißnähte.

Aufgrund der in korrosiven Umgebungen benötigten Korrosionsfestigkeit der Verbindungsmittel der Siebelemente können beispielsweise kunststoffummantelte Metallklammern oder entsprechende kunststoffummantelte Sicherungsbolzen verwendet werden. Sind die erfindungsgemäß eingesetzten Siebelemente aus Kunststoffen gefertigt, so können diese untereinander mittels einer Kunststoffschweißnaht verbunden werden.

Die Führungswinkel zur Aufnahme der in die Führungswinkel eingreifenden Bereiche der Siebelemente können ebenfalls aus Kunststoff oder aus Edelstahl oder gummiummanteltem Stahl gefertigt sein. Durch die einfache Ausgestaltung der Führungswinkel ohne die Notwendigkeit von Durchbohrungen für die Fixierung der Siebelemente ist eine Gummierung von Stahlführungswinkeln auch am Montageort einfach realisierbar. Bei der Ausgestaltung der Führungswinkel in Edelstahl reduziert sich der Materialbedarf gegenüber den bisher üblichen Ausgestaltungen deutlich, da auf eine Vielzahl von Bauteilen wie beispielsweise Scheiben und Schrauben verzichtet werden kann.

Das nachfolgende Ausführungsbeispiel zeigt einen erfindungsgemäßen Siebkorb zur Sicherung von Zu- oder Abläufen in einem Rauchgaswäscher einer Rauchgasentschwefelungsanlage. Das Ausführungsbeispiel steht exemplarisch für die erfindungsgemäße Idee.

Fig. 1 zeigt einen Querschnitt durch einen Absorbertank einer Rauchgasreinigungsanlage, in welchem ein erfindungsgemäßer Siebkorb installiert ist.

Fig. 2 zeigt eine Detailzeichnung eines erfindungsgemäßen Siebkorbes.

Fig. 3 zeigt ein Siebelement für einen erfindungsgemäßen Siebkorb.

Fig. 4 zeigt mehrere übereinander angeordnete Siebelemente in einem erfindungsgemäßen Siebkorb.

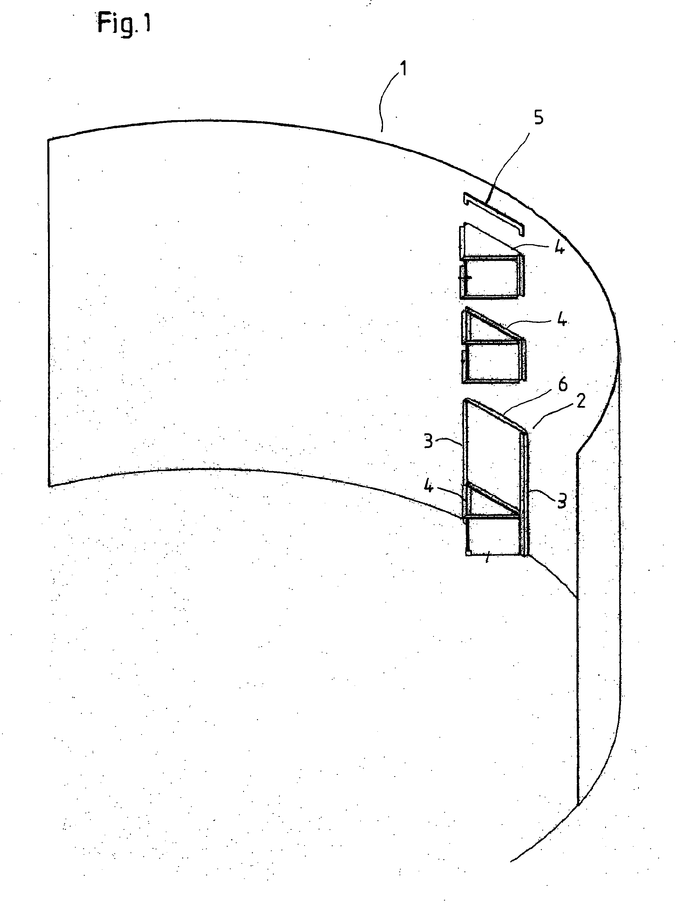

In Fig. 1 ist ein Absorbertank 1 eines Rauchgaswäschers in einer Verbrennungsanlage gezeigt. In dem Absorbertank 1 ist ein erfindungsgemäßer Siebkorb 2 vor einem Absorberlösungsablauf gezeigt. Der erfindungsgemäße Siebkorb 2 weist Führungswinkel 3 auf, welche parallel zueinander an der Absorbertankwand angebracht sind. Im Kopfbereich der Führungswinkel 3 ist ein die Führungswinkel 3 verbindendes Halteblech 6 vorgesehen. In die Führungswinkel 3 sind Siebelemente 4 einschiebbar, welche nach Einschub des letzten Siebelementes 4 durch Einsetzen einer Sicherungsklammer 5 fixiert werden.

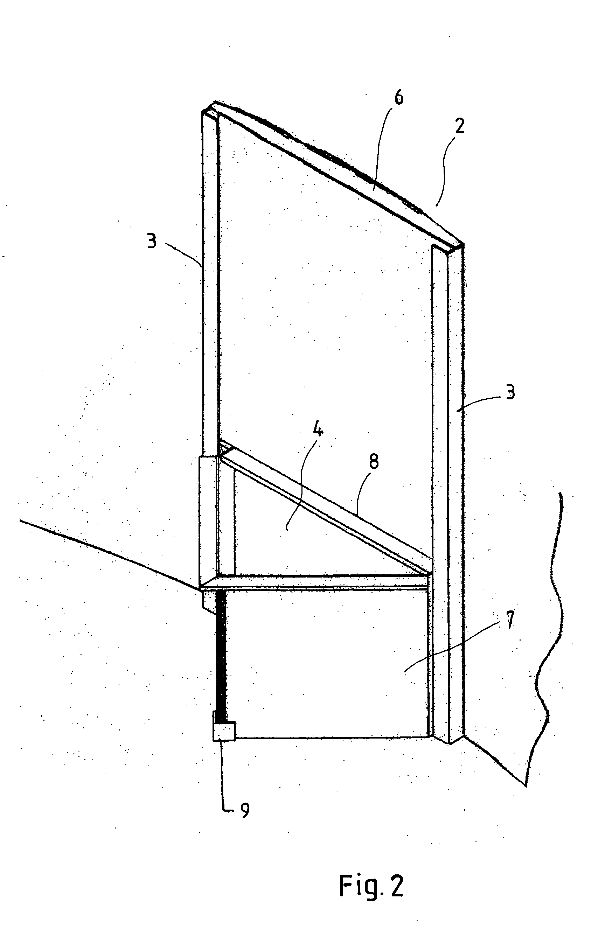

Fig. 2 zeigt eine Detailzeichnung eines erfindungsgemäßen Siebkorbes 2. Das Siebelement 4 weist in der gezeigten Ausführungsform zwei zueinander winkelig angeordnete Siebflächen 7 auf, welche an der Stoßkante der beiden Siebflächen 7 miteinander verbunden sind. Hierbei können die Siebflächen miteinander verschweißt oder durch geeignete Fixierungswinkel miteinander verbunden sein. Am offenen Ende des sich aufspannenden Dreiecks sind die Siebflächen mittels eines Haltestreben 8 miteinander verbunden, um eine hinreichende Stabilität des Siebelementes zu gewährleisten. Am Boden des Absorbertanks kann, soweit der durch den erfindungsgemäßen Siebkorb zu schützende Auslauf sich im Bodenbereich des Tanks befindet, ein Sicherungswinkel 9 vorgesehen sein, in welche die Spitze des durch die beiden Siebflächen 7 gebildeten Dreiecks eingreift. Hierdurch wird eine zusätzliche Fixierung und Stabilisierung des Siebelementes erreicht.

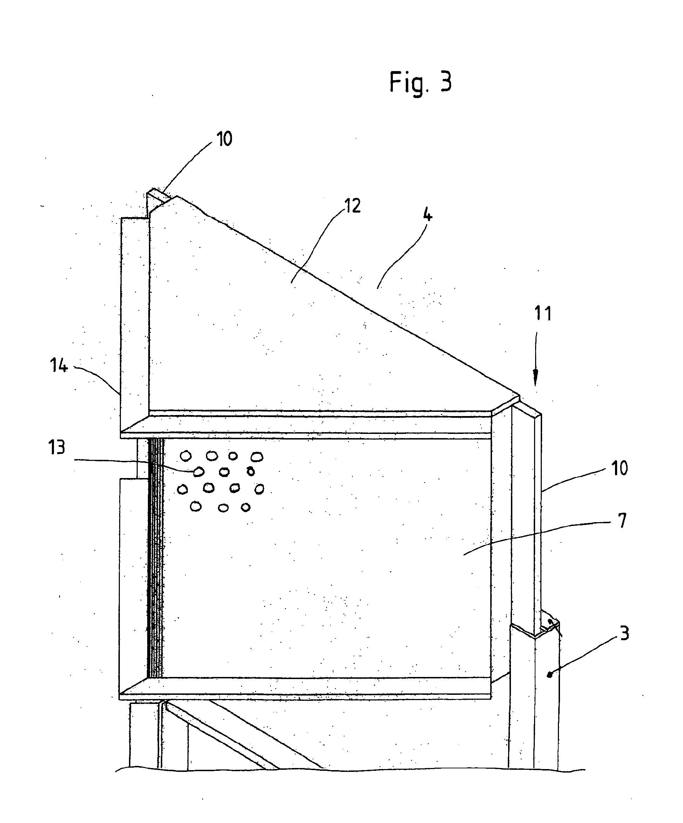

Fig. 3 zeigt eine Detailaufnahme eines in einem erfindungsgemäßen Siebkorb vorgesehenen Siebelementes 4. Das Siebelement 4 weist seitlich angeordnete Führungsschienen 10 auf, welche in die Führungswinkel 3 beim Einführen des Siebelementes 4 in die Führungswinkel 3 in Einführrichtung 11 eingreifen können. Die Siebflächen 7 weisen Siebbohrungen 13 auf, durch die die Absorptionsflüssigkeit in den zu sichernden Auslauf strömen kann. In der gezeigten Ausführung weisen die Siebelemente 4 in den Kopf- und Fußbereichen der Siebflächen 7 Auskragungen 14 auf, welche der Stabilisierung des Siebelementes 4 dienen. Die in Fig. 3 gezeigte Ausführung eines Siebelementes 4 weist im Kopfbereich eine den Querschnitt bedeckende Abschlussfläche 12 auf. Diese Abschlussfläche 12 kann erfindungsgemäß entweder ebenfalls als Siebfläche oder in Form einer Rückschlagsklappe ausgebildet sein, um bei einem Flüssigkeitsrückschlag eine Beschädigung des Siebkorbes 2 zu vermeiden.

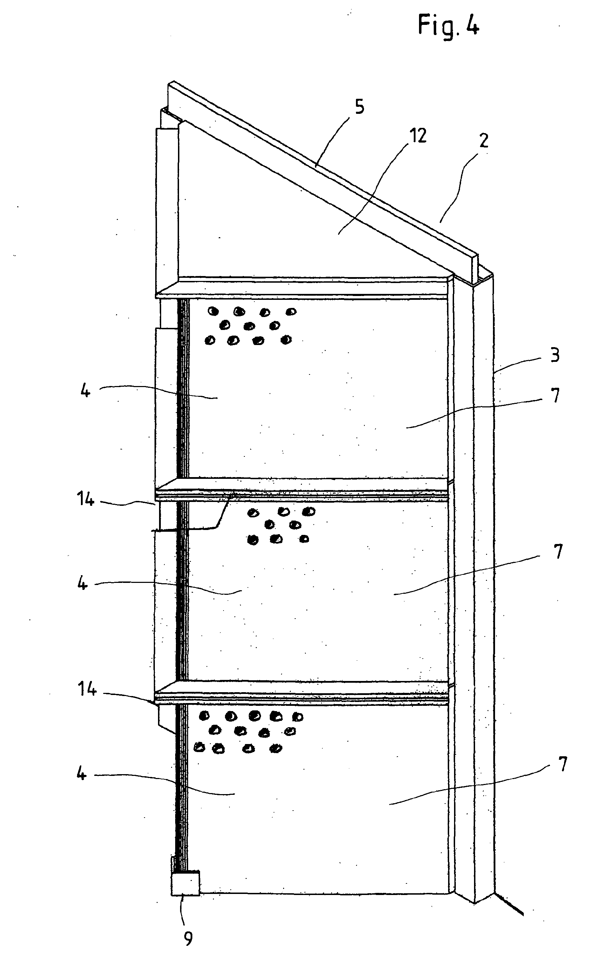

Fig. 4 zeigt einen endmontierten erfindungsgemäßen Siebkorb 2, welcher aus drei übereinander angeordneten Siebelementen 4 besteht. Im Bodenbereich ist das unterste Siebelement 4 durch einen Sicherungswinkel 9 gesichert. Die einzelnen Siebelemente 4 sind im Bereich der Auskragungen 14 miteinander verbunden. Das oberste Siebelement 4 weist eine in Form einer Rückschlagklappe ausgebildete Abschlussfläche 12 auf. Die Siebelemente 4 sind gegen Herausrutschen aus den Führungswinkeln 3 mittels einer Sicherungsklammer 5 gesichert.

Ein besonderer Vorteil des erfindungsgemäßen Siebkorbs 2 ist es, dass die Siebelemente 4 bereits vorgefertigt an den Montageort angeliefert werden können und dort nur noch in die montierten Führungswinkel 3 eingeschoben werden müssen. Hierdurch reduziert sich der Montageaufwand drastisch.

### Bezugszeichenliste:

- 1: Absorbertank
- 2: Siebkorb
- 3: Führungswinkel
- 4: Siebelement
- 5: Sicherungsklammer
- 6: Halteblock
- 7: Siebfläche
- 8: Haltestrebe
- 9: Sicherungswinkel
- 10: Führungsschiene
- 11: Einschubrichtung
- 12: Abschlussfläche
- 13: Siebbohrung
- 14: Auskragung

## Patentansprüche

1. Siebkorb zur Sicherung von Zu- oder Abläufen in Behältern, wobei der Siebkorb zwei an der Behälterwand montierbare Führungswinkel und ein Siebelement aufweist, an welchem in die Führungswinkel eingreifende Bereiche vorgesehen sind, wobei die Führungswinkel so zueinander angeordnet sind, dass das Siebelement in die Führungswinkel einschiebbar und über dem Zu- oder Ablauf fixierbar ist.

2. Siebkorb gemäß Anspruch 1, wobei das Siebelement eine im wesentlichen zur zwischen den Führungswinkeln aufgespannten Ebene parallel verlaufende Siebfläche aufweist.

3. Siebkorb gemäß Anspruch 1, wobei das Siebelement zumindest in Teilbereichen zur zwischen den Führungswinkeln aufgespannten Ebene antiparallel verlaufende Siebflächen aufweist.

4. Siebkorb nach einem der vorhergehenden Ansprüche, wobei zumindest das Siebelement aus Kunststoff, vorzugsweise Polypropylen oder einem Polypropylen-Blend, gefertigt ist.

5. Siebkorb nach einem der vorhergehenden Ansprüche, wobei das Siebelement mittels einer in die Führungswinkel einschiebbaren Sicherungsklammer fixiert wird.

6. Siebkorb nach einem der vorhergehenden Ansprüche, wobei wenigstens zwei Siebelemente in die Führungswinkel eingeschoben und untereinander verbunden sind.

7. Siebkorb gemäß Anspruch 6, wobei die Siebelemente untereinander mittels einer Sicherungsklammer, eines Sicherungsbolzens oder einer Schweißnaht miteinander verbunden sind.

8. Siebkorb nach einem der vorhergehenden Ansprüche, wobei die Führungswinkel aus gummiertem Stahl gebildet sind.
